# EUROPEAN PATENT APPLICATION

(11) **EP 3 285 219 A1**
(43) Date of publication of application: **21.02.2018**
(21) Application number: 17169718.8
(22) Date of filing: 05.05.2017
(51) Int. Cl.: G06Q 20/20, G06Q 20/22, G06Q 20/32, G06Q 20/38

(54) **RESOURCE TRANSFER METHOD AND APPARATUS, COMPUTER PROGRAM AND RECORDING MEDIUM**

(30) Priority: 16.08.2016 CN 201610676636
(71) Applicant: Beijing Xiaomi Mobile Software Co., Ltd., Beijing 100085 (CN)
(72) Inventor: FENG, Chao, Haidian District, Beijing 100085 (CN); YANG, Xiaoxing, Haidian District, Beijing 100085 (CN); WU, Yihan, Haidian District, Beijing 100085 (CN)
(74) Representative: Reeve, Nicholas Edward

(57) **Abstract**

The present invention discloses a resource transfer method and apparatus, a computer program and a recording medium, which pertain to the field of computer technology. The resource transfer method is implemented in an electronic device provided with an NFC controller and a security chip and comprises: setting virtual resource card information stored in the security chip to an activated state; reading the virtual resource card information in the activated state by the NFC controller; providing the virtual resource card information by the NFC controller to an external device, the external device being configured to transfer resources in a first account corresponding to the virtual resource card information to a second account; and setting the virtual resource card information in the security chip to a deactivated state. The invention solves the problem in the related art that a resource account suffers from security risks if an NFC card emulation function of a mobile device is always enabled, and achieves the effect of improving security of the resource account.

## Description

### TECHNICAL FIELD

The present invention is related to the field of computer technology, and more particularly to a resource transfer method and apparatus, a computer program and a recording medium.

### BACKGROUND

Near Field Communication (NFC) payment is a common mobile payment method.

In related art, after establishing a radio frequency connection with an external device (such as a POS terminal) by means of NFC, a mobile device can make use of an NFC card emulation function to emulate a bank card to perform interaction of bank card information with the external device.

If the NFC card emulation function of the mobile terminal is continuously enabled, the bank card information will be always in an accessible state, making the bank card account suffer from a security risk.

### SUMMARY OF THE INVENTION

The present invention provides a resource transfer method and apparatus, a computer program and a recording medium as follows.

According to a first aspect of the invention, there is provided a resource transfer method, which is implemented in an electronic device provided with a Near Field Communication (NFC) controller and a security chip. The method comprises: setting virtual resource card information stored in the security chip to an activated state, the activated state being a state where the virtual resource card information is readable by the NFC controller; reading the virtual resource card information in the activated state by the NFC controller; providing the virtual resource card information by the NFC controller to an external device, the external device being configured to transfer resources in a first account corresponding to the virtual resource card information to a second account; and setting the virtual resource card information in the security chip to a deactivated state, the deactivated state being a state where the virtual resource card information is unreadable by the NFC controller.

The electronic device reads virtual resource card information in an activated state via the NFC controller by setting the virtual resource card information stored in the security chip to the activated state, provides the read virtual resource card information to the external device, and then sets the virtual resource card information to a deactivated state. Since the virtual resource card information is set to the deactivated state, the NFC controller has no right to read the virtual resource card information and the virtual resource card information cannot be provided to the external device any more, thereby solving the problem in the related art that a resource account suffers from security risks if an NFC card emulation function of a mobile device is always enabled, and achieving the effect of improving security of the resource account.

Optionally, in the electronic device, a first application for transferring resources and a second application for managing the security chip are run. Setting the virtual resource card information in the security chip to the deactivated state comprises: receiving, by the second application, a deactivation instruction sent by the first application, the deactivation instruction being sent after the first application completes transferring of the resources; and setting the virtual resource card information in the security chip to the deactivated state by the second application.

By sending from the first application to the second application a deactivation instruction after the resource transfer is completed, the second application sets the virtual resource card information in the security chip to a deactivated state, so that the virtual resource card information in an activated state in the security chip is set to the deactivated state after completion of the resource transfer and the NFC controller does not provide the virtual resource card information to the external device any more.

Optionally, the method further comprises: if the second application fails to receive a deactivation instruction sent by the first application within a predetermined time period, setting the virtual resource card information in the security chip to the deactivated state by the second application.

Optionally, in the electronic device, a first application for transferring resources and a second application for managing the security chip are run. Setting the virtual resource card information in the security chip to the deactivated state comprises: detecting, by the second application, whether an activation time length during which the virtual resource card information has been activated reaches a predetermined threshold; and if the activation time length reaches the predetermined threshold, setting the virtual resource card information in the security chip to the deactivated state by the second application.

Optionally, the method further comprises: when the second application receives an activation request sent by the first application, acquiring, by the second application, identity verification information input by a user and detecting whether the identity verification information matches predetermined verification information. If the identity verification information matches the predetermined verification information, the virtual resource card information stored in the security chip is set to the activated state.

Before setting the virtual resource card information in the security chip to the activated state, the second application determines whether the user of the electronic device has a legal identity, by detecting whether the identity verification information matches the predetermined verification information. If there is a match, it is judged that the user of the electronic device has a legal identity and the virtual resource card information is set to the activated state, thereby ensuring security of the resource account corresponding to the virtual resource card information.

Optionally, the method further comprises: when the NFC controller is within a predetermined range of the external device, establishing a radio frequency connection between the NFC controller and the external device; receiving, by the NFC controller, a resource transfer request from the external device, and sending the resource transfer request to the first application; and reading, by the first application, each virtual resource card information stored in the security chip, and displaying a virtual resource card corresponding to each virtual resource card information; and acquiring, by the first application, a virtual resource card selected by a user, and sending an activation request to the second application. The activation request triggers the second application to set the virtual resource card information, which is stored in the security chip and corresponds to the virtual resource card selected by the user, to the activated state.

Optionally, reading, by the first application, each virtual resource card information stored in the security chip comprises: sending, by the first application, a virtual resource card information acquisition request to the second application; and after the second application receives the virtual resource card information acquisition request, reading each virtual resource card information stored in the security chip and sending the read virtual resource card information to the first application.

According to a second aspect of the invention, there is provided a resource transfer apparatus, which is implemented in an electronic device provided with a Near Field Communication (NFC) controller and a security chip. The resource transfer apparatus comprises: a first setting module configured to set virtual resource card information stored in the security chip to an activated state, the activated state being a state where the virtual resource card information is readable by the NFC controller; a first reading module configured to read the virtual resource card information in the activated state by the NFC controller; a providing module configured to provide the virtual resource card information read by the first reading module to an external device by the NFC controller, the external device being configured to transfer resources in a first account corresponding to the virtual resource card information to a second account; and a second setting module configured to set the virtual resource card information in the security chip to a deactivated state, the deactivated state being a state where the virtual resource card information is unreadable by the NFC controller.

Optionally, in the electronic device, a first application for transferring resources and a second application for managing the security chip are run. The second setting module comprises: a receiving sub-module configured to receive, by the second application, a deactivation instruction sent by the first application, the deactivation instruction being sent after the first application completes transferring of the resources; and a first setting sub-module configured to set the virtual resource card information in the security chip to the deactivated state by the second application.

Optionally, in the electronic device, a first application for transferring resources and a second application for managing the security chip are run. The second setting module comprises: a detecting sub-module configured to detect, by the second application, whether an activation time length during which the virtual resource card information has been activated reaches a predetermined threshold; and a second setting sub-module configured to, if the detecting sub-module detects that the activation time length reaches the predetermined threshold, set the virtual resource card information in the security chip to the deactivated state by the second application.

Optionally, the apparatus further comprises: a third setting module configured to, if the second application fails to receive a deactivation instruction sent by the first application within a predetermined time period, set the virtual resource card information in the security chip to the deactivated state by the second application.

Optionally, the apparatus further comprises: a detecting module configured to, when the second application receives an activation request sent by the first application, acquire, by the second application, identity verification information input by a user and detect whether the identity verification information matches predetermined verification information; and a fourth setting module configured to, if the detecting module detects that the identity verification information matches the predetermined verification information, set the virtual resource card information stored in the security chip to the activated state.

Optionally, the apparatus further comprises: an establishing module configured to, when the NFC controller is within a predetermined range of the external device, establish a radio frequency connection between the NFC controller and the external device; a first sending module configured to receive, by the NFC controller, a resource transfer request from the external device, and send the resource transfer request to the first application; a second reading module configured to read, by the first application, each virtual resource card information stored in the security chip, and display a virtual resource card corresponding to each virtual resource card information; and a second sending module configured to acquire, by the first application, a virtual resource card selected by a user, and send an activation request to the second application, wherein the activation request triggers the second application to set the virtual resource card information, which is stored in the security chip and corresponds to the virtual resource card selected by the user, to the activated state.

Optionally, the second reading module comprises: a sending sub-module configured to send, by the first application, a virtual resource card information acquisition request to the second application; and a reading sub-module configured to, after the second application receives the virtual resource card information acquisition request, read each virtual resource card information stored in the security chip and send the read virtual resource card information to the first application.

According to a third aspect of the invention, there is provided a resource transfer apparatus, which is implemented in an electronic device provided with a Near Field Communication (NFC) controller and a security chip. The apparatus comprises: a processor, and a memory storing instructions executable by the processor. The processor is configured to: set virtual resource card information stored in the security chip to an activated state, the activated state being a state where the virtual resource card information is readable by the NFC controller; read the virtual resource card information in the activated state by the NFC controller; provide the virtual resource card information by the NFC controller to an external device, the external device being configured to transfer resources in a first account corresponding to the virtual resource card information to a second account; and set the virtual resource card information in the security chip to a deactivated state, the deactivated state being a state where the virtual resource card information is unreadable by the NFC controller.

In one particular embodiment, the steps of the resource transfer method are determined by computer program instructions.

Consequently, according to a fourth aspect, the invention is also directed to a computer program for executing the steps of the resource transfer method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It should be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram of an implementation environment according to an exemplary embodiment.
Fig. 2 is a flowchart of a resource transfer method according to an exemplary embodiment.
Fig. 3A is a schematic diagram illustrating acquisition, from a first application, of account information input by a user according to an exemplary embodiment.
Fig. 3B is a flowchart of a resource transfer method according to another exemplary embodiment.
Fig. 3C is a structural diagram of a resource transfer system according to another exemplary embodiment.
Fig. 3D is a schematic diagram of displaying of virtual resource cards according to another exemplary embodiment.
Fig. 3E is a flowchart illustrating verification, by a second application, of an identity of a user of an electronic device according to another exemplary embodiment.
Fig. 3F is a flowchart illustrating reading, by a first application, of each virtual resource card information stored in a security chip according to another exemplary embodiment.
Fig. 4A is a flowchart of a resource transfer method according to yet another exemplary embodiment.
Fig. 4B is a structural diagram of a resource system according to still another exemplary embodiment.
Fig. 5A is a block diagram of a resource transfer apparatus according to an exemplary embodiment.
Fig. 5B is a block diagram of a resource transfer apparatus according to another exemplary embodiment.
Fig. 6 is a block diagram of a resource transfer apparatus according to an exemplary embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise indicated. The implementations set forth in the following description of embodiments do not represent all implementations consistent with the invention. Instead, they are merely examples of apparatuses and methods consistent with aspects related to the invention as recited in the appended claims.

As used herein, the term "resource" refers to a numerical value which has a monetary attribute or is worth money and is represented in an electronic form. Typical resources include at least one of electronic currency, virtual point, virtual level, virtual item and virtual character. Hereinafter, description will be given by taking an example where resources are electronic currencies.

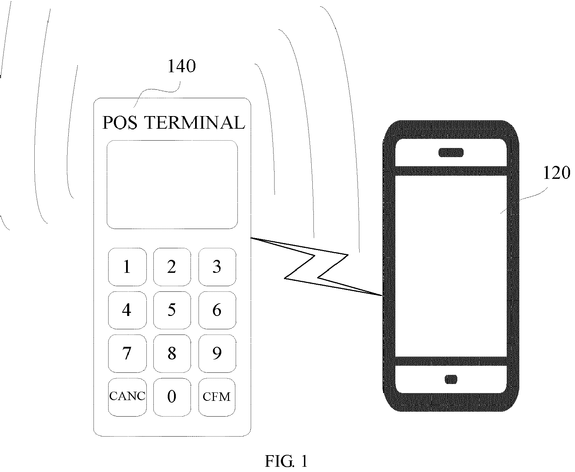

Fig. 1 is a schematic diagram of an implementation environment according to an exemplary embodiment. As shown in Fig. 1, the implementation environment may comprise an electronic device 120 and an external device 140.

The electronic device 120 is an electronic device provided with an NFC controller, an NFC antenna and a security chip. For example, the electronic device may be a tablet, a smart phone, a laptop, a netbook or the like.

Optionally, a first application for transferring resources and a second application for managing the security chip are run in the electronic device 120. The second application has right to read from and write into the security chip.

Optionally, the first application further manages virtual resource cards, and virtual resource card information corresponding to the virtual resource cards is stored in the security chip. At least one piece of virtual resource card information is stored in the security chip, and each virtual resource card information uniquely corresponds to a resource account.

The electronic device 120 establishes a radio frequency communication connection with the external device 140 by means of the NFC technology. Optionally, the NFC controller of the electronic device 120 receives from and sends to the external device 140 radio frequency signals via the NFC antenna.

The external device 140 is a device with a resource transfer function, such as a Point of Sale (POS) terminal and an automatic vending machine. In addition, an NFC controller and an NFC antenna are built in the external device 140.

Optionally, the external device 140 is configured to complete resource transfer between a first account and a second account. Optionally, the first account is a resource account corresponding to virtual resource card information acquired by the external device 140 from the electronic device 120, and the second account is a resource account provided by the external device 140.

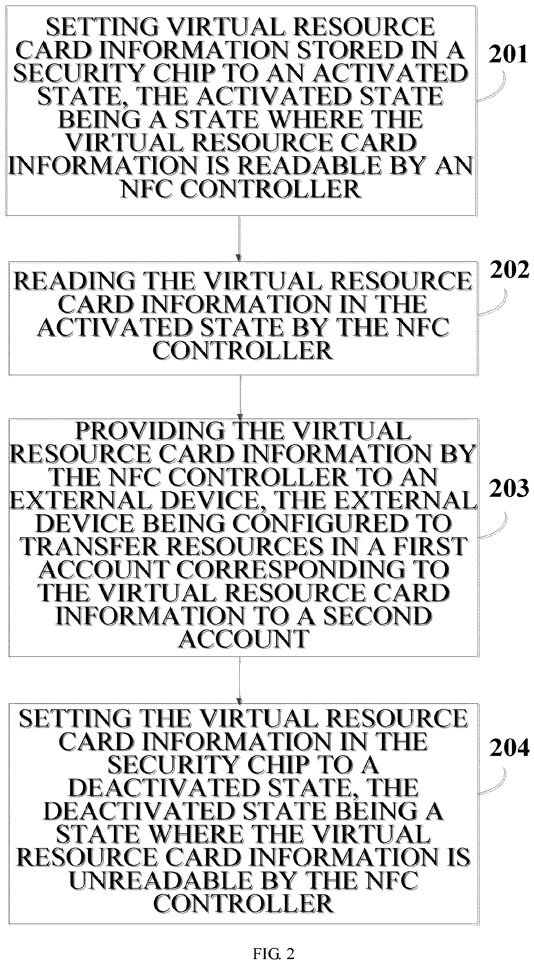

Fig. 2 is a flowchart of a resource transfer method according to an exemplary embodiment. The resource transfer method is implemented in an electronic device provided with an NFC controller and a security chip. The resource transfer method may comprise the following steps.

At step 201, virtual resource card information stored in the security chip is set to an activated state, the activated state being a state where the virtual resource card information is readable by the NFC controller.

At step 202, the virtual resource card information in the activated state is read by the NFC controller.

At step 203, the virtual resource card information is provided by the NFC controller to an external device, the external device being configured to transfer resources in a first account corresponding to the virtual resource card information to a second account.

At step 204, the virtual resource card information in the security chip is set to a deactivated state, the deactivated state being a state where the virtual resource card information is unreadable by the NFC controller.

In conclusion, according to the resource transfer method provided by the embodiment of the invention, the electronic device reads virtual resource card information in an activated state via the NFC controller by setting the virtual resource card information stored in the security chip to the activated state, provides the read virtual resource card information by the NFC controller to the external device, and then sets the virtual resource card information to a deactivated state. Since the virtual resource card information is set to the deactivated state, the NFC controller has no right to read the virtual resource card information and the virtual resource card information cannot be provided to the external device any more, thereby solving the problem in the related art that a resource account suffers from security risks if an NFC card emulation function of a mobile device is always enabled, and achieving the effect of improving security of the resource account.

Before performing resource transfer by using the electronic device, it is needed to store virtual resource card information in the security chip. Optionally, this can be implemented in one of the following two possible manners.

In a first possible manner, account information of a resource account input by a user is acquired by the first application and determined as virtual resource card information, and the virtual resource card information is stored by the first application into the security chip.

The account information referred to herein at least includes account number information of the resource account. Optionally, the account information may further include a password of the resource account and other information related to the resource account. Taking an example where the resource account is a bank card account, the account information may include a card number of the bank card, a password of the bank card, an account bank corresponding to the bank card. The virtual resource card information is not limited by the embodiment but can be determined according to actual situations.

Taking an example where a bank card number is determined as virtual resource card information, a bank card number "62284804025648900**" input by the user is acquired and determined as the virtual resource card information of a virtual resource card.

In a second possible manner, account information of a resource account input by the user is acquired by the first application and virtual resource card information is generated based on the account information; the account information is bound with the virtual resource card information, and the binding relationship between the account information and the virtual resource card information is stored into a server corresponding to the resource account; and the virtual resource card information is stored into the security chip.

Optionally, when the virtual resource card information is generated based on the account information, a virtual account number is generated for the resource account and the account number information in the account information is replaced by the generated virtual account number to obtain the virtual resource card information. Generation of a virtual account number can be implemented by those skilled in the art, and will be not described here redundantly.

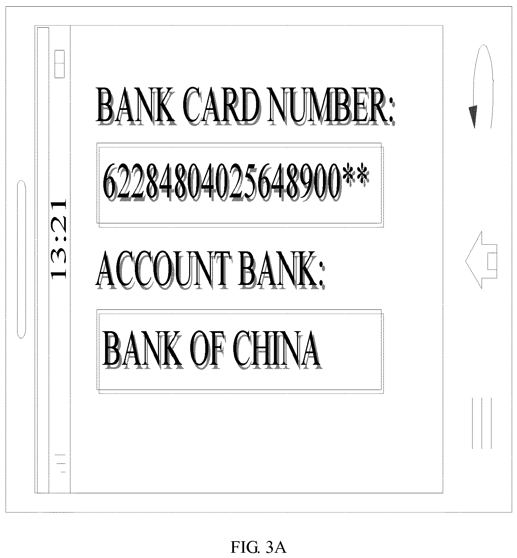

Taking an example where the resource account is a bank card account, as shown in Fig. 3A, a bank card number "62284804025648900**" input by a user is acquired by the first application, and the account bank corresponding to the bank card number is Bank of China. A virtual account number "11113569102469720**" is randomly generated for the bank card account and the account bank of the back account is Bank of China, so the virtual resource card information is "11113569102469720**; Bank of China". The account information of the bank account "62284804025648900**; Bank of China" and the virtual resource card information "11113569102469720**; Bank of China" are bound together by the first application and stored into a server of Bank of China, and the virtual resource card information "11113569102469720**; Bank of China" is stored into the security chip.

Typically, for storing virtual resource card information into the security chip by the first application, the virtual resource card information to be stored into the security chip is sent by the first application to the second application and stored into the security chip by the second application.

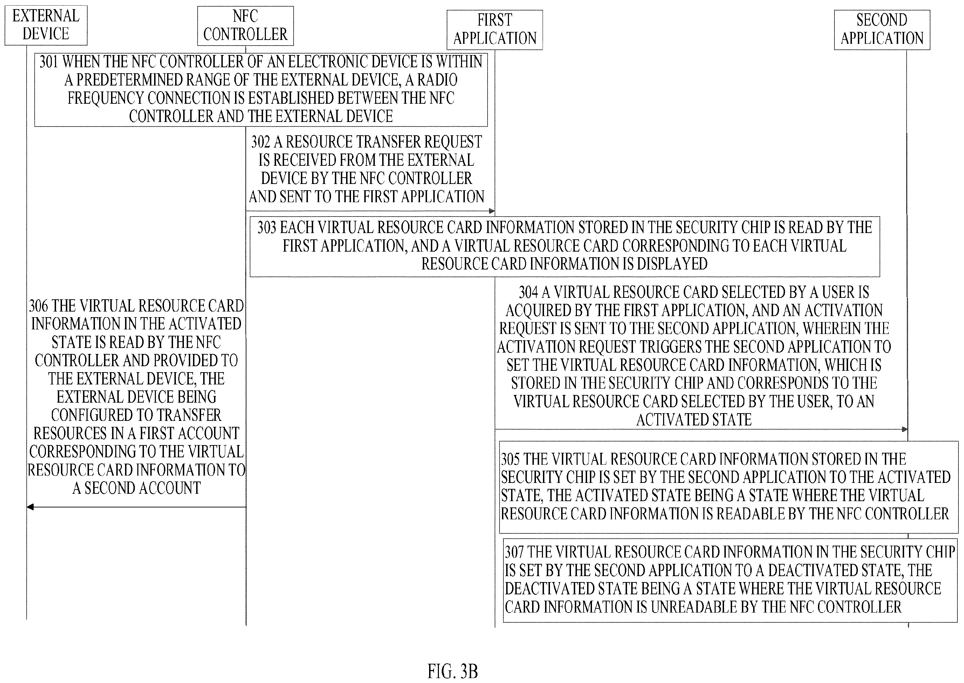

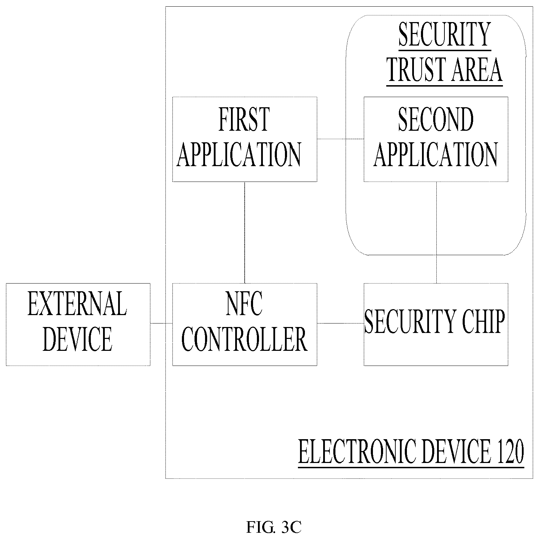

Fig. 3B is flowchart of a resource transfer method according to another exemplary embodiment. Fig. 3C is a structural diagram of a resource transfer system according to another exemplary embodiment. The resource transfer method is implemented in the implementation environment shown in Fig. 1, and may comprise the following steps.

At step 301, when the NFC controller of the electronic device is within a predetermined range of the external device, a radio frequency connection is established between the NFC controller and the external device.

The NFC controller of the electronic device is typically in a standby mode. When needing to perform resource transfer, the external device emits a radio frequency field within a predetermined range thereof. When the NFC controller of the electronic device is within the predetermined range of the external device, the NFC antenna electrically connected to the NFC controller receives a radio frequency signal sent by the external device. The NFC controller is activated to switch from the standby mode to an operating mode, and a radio frequency connection is established with the external device.

At step 302, a resource transfer request is received from the external device by the NFC controller and sent to the first application.

Typically, after a radio frequency connection is established between the external device and the NFC controller of the electronic device, the external device sends a radio signal carrying a resource transfer request to the NFC controller. When receiving the resource transfer request, the NFC controller sends the resource transfer request to the first application.

At step 303, each virtual resource card information stored in the security chip is read by the first application, and a virtual resource card corresponding to each virtual resource card information is displayed.

After the first application receives the resource transfer request, each virtual resource card information stored in the security chip is read by the first application and a virtual resource card corresponding to each virtual resource card information is displayed. Optionally, the virtual resource card is an electronic card generated by the first application based on the virtual resource card information. Optionally, part or all of the virtual resource card information may be displayed on the virtual resource card.

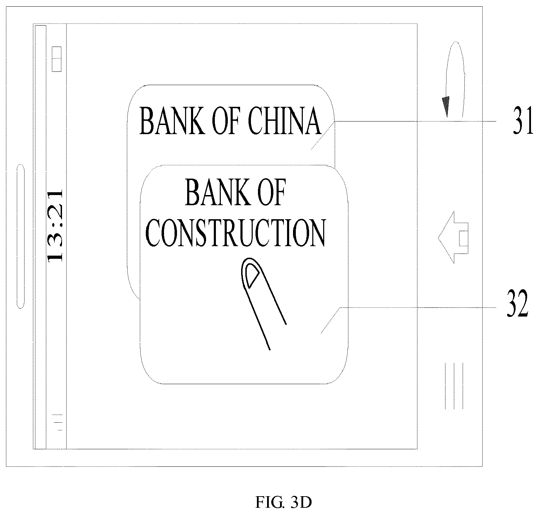

For example, the virtual resource card information read by the first application from the security chip includes "6**84804025648900**; Bank of China" and "6**84804025648900**; Bank of Construction". As shown in Fig. 3D, a virtual resource card 31 corresponding to "6**84804025648900**; Bank of China" is displayed, and account bank information "Bank of China" is displayed on the virtual resource card 31; and a virtual resource card 32 corresponding to "6**84804025648900**; Bank of Construction" is displayed, and account bank information "Bank of Construction" is displayed on the virtual resource card 32.

At step 304, a virtual resource card selected by a user is acquired by the first application, and an activation request is sent to the second application. The activation request triggers the second application to set the virtual resource card information, which is stored in the security chip and corresponds to the virtual resource card selected by the user, to an activated state.

Optionally, the activation request carries virtual resource information corresponding to the selected virtual resource card.

Acquisition of a virtual resource card selected by a user after virtual resource cards are displayed by the first application can be implemented by those skilled in the art, and will not be described here redundantly.

At step 305, the virtual resource card information stored in the security chip is set to the activated state by the second application, the activated state being a state where the virtual resource card information is readable by the NFC controller.

Optionally, when receiving the activation request carrying the virtual resource information, the second application sets the virtual resource information stored in the security chip to an activated state, so that the NFC controller has right to read the virtual resource information.

For example, referring still to Fig. 3D, if the user selects the virtual resource card 3D, then the first application determines that the virtual resource information corresponding to the virtual resource card 32 is "6**84804025648900**; Bank of Construction" and sends an activation request carrying "6**84804025648900**; Bank of Construction" to the second application. The second application sets the virtual resource information "6**84804025648900**; Bank of Construction" to an activated state.

Typically, after setting the virtual resource card information stored in the security chip to the activated state, the second application sends a confirmation message to the first application, informing the first application that the virtual resource card information has been set to the activated state. After receiving the confirmation message, the first application informs the NFC controller to provide the virtual resource card information to the external device, for which reference can be made to step 306.

At step 306, the virtual resource card information in the activated state is read by the NFC controller and provided to an external device, the external device being configured to transfer resources in a first account corresponding to the virtual resource card information to a second account.

The NFC controller reads the virtual resource card information in the activated state and sends the same to the external device which has established a radio frequency connection therewith.

Optionally, the second account is determined by the external device. For example, when the external device is a POS terminal, the second account may be a bank account bound with the POS terminal. As another example, when the external device is an automatic vending machine, the second account may be a bank account of a company to which the automatic vending machine belongs.

The process for the external device to complete resource transfer by using the acquired virtual resource card information and the second account is known to those skilled in the art, and will not be described here redundantly.

At step 307, the virtual resource card information in the security chip is set by the second application to a deactivated state, the deactivated state being a state where the virtual resource card information is unreadable by the NFC controller.

Typically, after completing resource transfer, the external device sends a notification to the NFC controller of the electronic device to indicate the completion of resource transfer. When receiving the notification, the NFC controller of the electronic device sends the notification to the first application. After receiving the notification, the first application sends a deactivation instruction to the second application.

Optionally, when receiving the deactivation instruction sent by the first application, the second application sets the virtual resource card information in the activated state in the security chip to a deactivated state.

Optionally, to improve security of resource transfer, step 307 may be replaced by: setting the virtual resource card information to the deactivated state before an activation time length of the virtual resource card information exceeds a predetermined time length.

The activation time length is a time length during which the virtual resource card has been set to the activated state. The predetermined time length may be set by a developer of the system or customized by the user. For example, the system developer may set the predetermined time length to 30s or 60s.

Optionally, the virtual resource card information in the security chip may be set to the deactivated state, before the activation time length of the virtual resource card information exceeds the predetermined time length, in one of the following two manners.

In a first possible manner, when receiving the deactivation instruction sent by the first application, the second application sets the virtual resource card information in the activated state in the security chip to the deactivated state. If the second application fails to receive the deactivation instruction from the first application within the predetermined time period, the virtual resource card information in the security chip is set to the deactivated state by the second application.

Taking an example where the predetermined time length is 60s, if the second application fails to receive the deactivation instruction from the first application within 60s after setting virtual resource card information A in the security chip to the activated state, the second application sets the virtual resource card information A to the deactivated state.

Generally, the second application fails to receive the deactivation instruction from the first application within the predetermined time period, because the external device has not completed the resource transfer or the first application fails to receive the notification sent by the external device for indicating the completion of resource transfer.

In a second possible manner, it is detected by the second application whether the activation time length of the virtual resource card information reaches a predetermined threshold. If the activation time length reaches the predetermined threshold, the virtual resource card information in the security chip is set by the second application to the deactivated state.

The predetermined threshold is smaller than the predetermined time length. The specific value of the predetermined threshold may be set by the developer of the system or customized by the user. For example, when the predetermined time length is 60s, the predetermined threshold is 58s. As another example, when the predetermined time length is 30s, the predetermined threshold is 29s.

For example, when the predetermined threshold is 30s, the second application activates the virtual resource card information A in the security chip after receiving the activation request from the first application, and the virtual resource card information A is set by the second application to the deactivated state when the activation time length of the virtual resource card information A reaches 30s.

In conclusion, according to the resource transfer method provided by the embodiment of the invention, virtual resource card information stored in the security chip is set by the second application to an activated state, the virtual resource card information in the activated state is read by the NFC controller, the read virtual resource card information is provided to the external device, and then the virtual resource card information in the security chip is set by the second application to a deactivated state. Since the second application sets the virtual resource card information to the deactivated state, the NFC controller has no right to read the virtual resource card information and the virtual resource card information cannot be provided to the external device any more, thereby solving the problem in the related art that a resource account suffers from security risks if an NFC card emulation function of a mobile device is always enabled, and achieving the effect of improving security of the resource account.

In addition, by sending from the first application to the second application a deactivation instruction after the resource transfer is completed, the second application sets the virtual resource card information in the security chip to a deactivated state, so that the virtual resource card information in an activated state in the security chip is set to the deactivated state after completion of the resource transfer and the NFC controller does not provide the virtual resource card information to the external device any more.

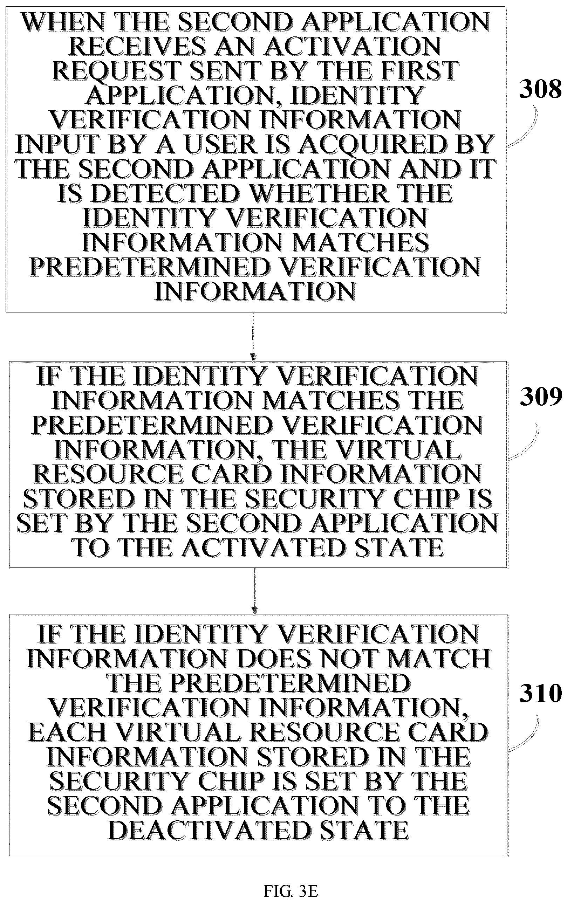

Optionally, to improve the security of resource transfer, the second application needs to further verify the identity of the user of the electronic device, before setting the virtual resource card information to the activated state. Specifically, this can be implemented by performing several steps shown in Fig. 3E.

At step 308, when the second application receives an activation request sent by the first application, identity verification information input by a user is acquired by the second application and it is detected whether the identity verification information matches predetermined verification information.

The identity verification information and the predetermined verification information referred to herein may be fingerprint information, digital passwords or voiceprint information, which is not limited by the embodiment. Detection of whether the identity verification information matches the predetermined verification information can be implemented by those skilled in the art, and will not be described here redundantly.

At step 309, if the identity verification information matches the predetermined verification information, the virtual resource card information stored in the security chip is set by the second application to the activated state.

At step 310, if the identity verification information does not match the predetermined verification information, each virtual resource card information stored in the security chip is set by the second application to the deactivated state.

Before setting the virtual resource card information in the security chip to the activated state, the second application verifies the identity legality of the user of the electronic device, by determining whether the identity verification information matches the predetermined verification information. If there is a match, it is judged that the user of the electronic device has a legal identity and the virtual resource card information is set to the activated state, thereby ensuring security of the resource account corresponding to the virtual resource card information.

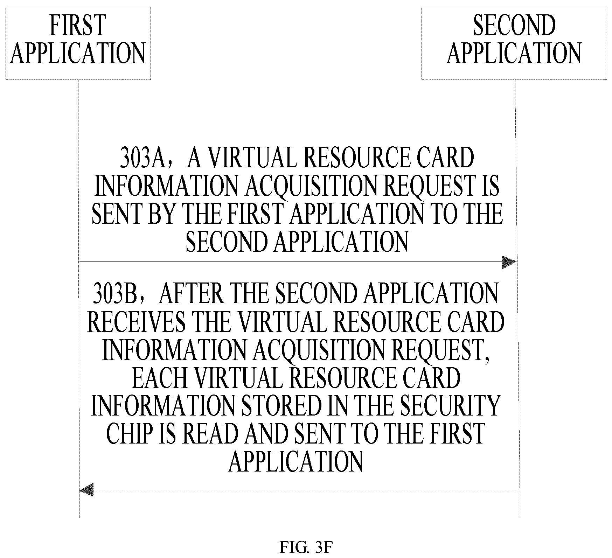

Optionally, each virtual resource card information stored in the security chip may be read by the first application by performing several steps shown in Fig. 3F.

At step 303a, a virtual resource card information acquisition request is sent by the first application to the second application.

At step 303b, after the second application receives the virtual resource card information acquisition request, each virtual resource card information stored in the security chip is read and sent to the first application.

In practical implementation, the first application may be a MiPay application developed by Xiaomi Inc., and the second application may be a QPAY application for managing the security chip in a TrustZone of the electronic device.

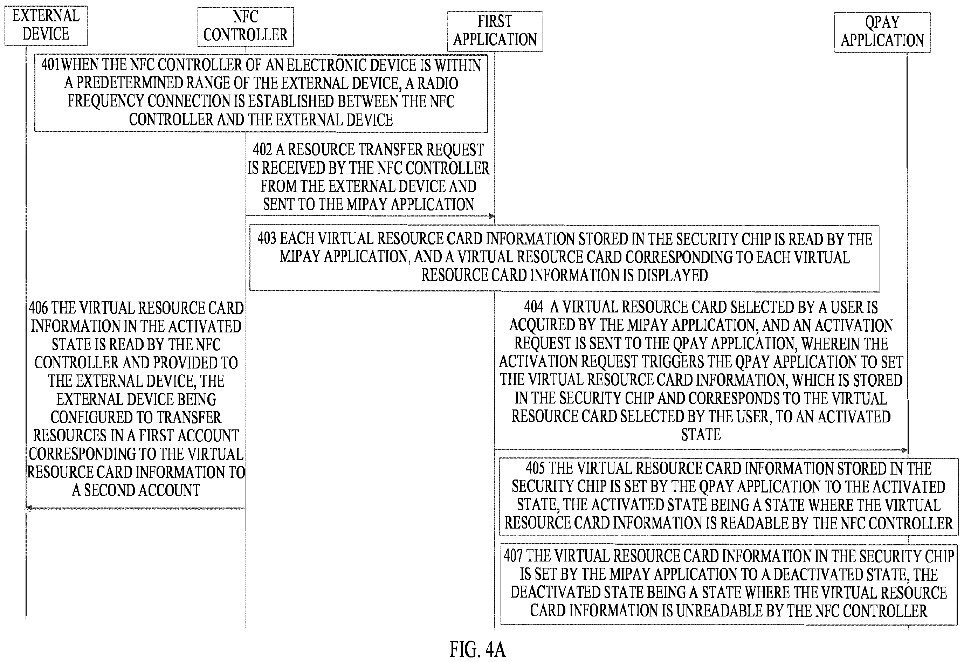

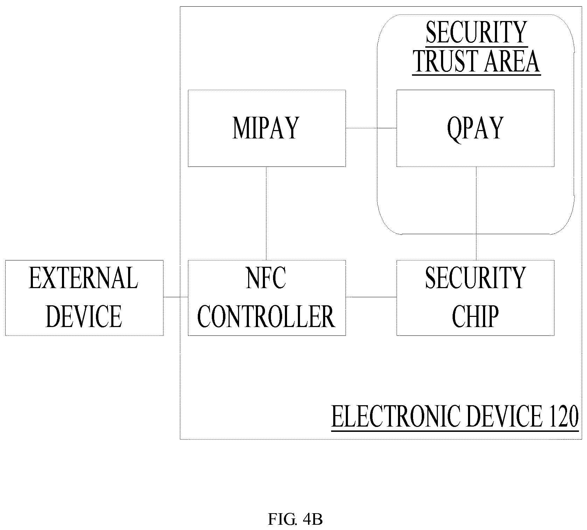

Fig. 4A is a flowchart of a resource transfer method according to yet another exemplary embodiment. Fig. 4B is a structural diagram of a resource system according to still another exemplary embodiment. The resource transfer method is implemented in the implementation environment shown in Fig. 1, and may comprise the following steps.

At step 401, when the NFC controller of the electronic device is within a predetermined range of the external device, a radio frequency connection is established between the NFC controller and the external device.

The NFC controller of the electronic device is typically in a standby mode. When needing to perform resource transfer, the external device emits a radio frequency field within a predetermined range thereof. When the NFC controller of the electronic device is within the predetermined range of the external device, the NFC antenna electrically connected to the NFC controller receives a radio frequency signal sent by the external device. The NFC controller is activated to switch from the standby mode to an operating mode, and a radio frequency connection is established with the external device.

At step 402, a resource transfer request is received by the NFC controller from the external device and sent to the MiPay application.

Typically, after a radio frequency connection is established between the external device and the NFC controller of the electronic device, the external device sends a radio signal carrying a resource transfer request to the NFC controller. When receiving the resource transfer request, the NFC controller sends the resource transfer request to the MiPay application.

At step 403, each virtual resource card information stored in the security chip is read by the MiPay application, and a virtual resource card corresponding to each virtual resource card information is displayed.

After the MiPay application receives the resource transfer request, each virtual resource card information stored in the security chip is read by the MiPay application and a virtual resource card corresponding to each virtual resource card information is displayed. Optionally, the virtual resource card is an electronic card generated by the MiPay application based on the virtual resource card information.

At step 404, a virtual resource card selected by a user is acquired by the MiPay application, and an activation request is sent to the QPAY application. The activation request triggers the QPAY application to set the virtual resource card information, which is stored in the security chip and corresponds to the virtual resource card selected by the user, to an activated state.

Optionally, when acquiring the virtual resource card selected by the user, the MiPay application determines virtual resource information corresponding to the selected virtual resource card and sends an activation request carrying the virtual resource information corresponding to the selected virtual resource card to the QPAY application.

Acquisition of a virtual resource card selected by a user after virtual resource cards are displayed by the MiPay application can be implemented by those skilled in the art, and will not be described here redundantly.

At step 405, the virtual resource card information stored in the security chip is set by the QPAY application to the activated state, the activated state being a state where the virtual resource card information is readable by the NFC controller.

Optionally, when receiving the activation request carrying the virtual resource information, the QPAY application sets the virtual resource information in the security chip to an activated state, so that the NFC controller has right to read the virtual resource information.

Typically, after setting the virtual resource card information stored in the security chip to the activated state, the QPAY application send a confirmation message to the MiPay application, informing the MiPay application that the virtual resource card information has been set to the activated state. After receiving the confirmation message, the MiPay application informs the NFC controller to provide the virtual resource card information to the external device, for which reference can be made to step 406.

At step 406, the virtual resource card information in the activated state is read by the NFC controller and provided to the external device. The external device is configured to transfer resources in a first account corresponding to the virtual resource card information to a second account.

Optionally, the second account is determined by the external device. For example, when the external device is a POS terminal, the second account may be a bank account bound with the POS terminal. As another example, when the external device is an automatic vending machine, the second account may be a bank account of a company to which the automatic vending machine belongs.

The process for the external device to complete resource transfer by using the acquired virtual resource card information and the second account is known to those skilled in the art, and will not be described here redundantly.

At step 407, the virtual resource card information in the security chip is set by the MiPay application to a deactivated state, the deactivated state being a state where the virtual resource card information is unreadable by the NFC controller.

Typically, after completing resource transfer, the external device sends a notification to the NFC controller of the electronic device to indicate the completion of resource transfer. When receiving the notification, the NFC controller of the electronic device sends the notification to the MiPay application. After receiving the notification, the MiPay application sends a deactivation instruction to the QPAY application.

Optionally, when receiving the deactivation instruction sent by the MiPay application, the QPAY application sets the virtual resource card information in the activated state in the security chip to a deactivated state.

Optionally, to improve security of resource transfer, step 407 may be replaced by: setting the virtual resource card information to the deactivated state before an activation time length of the virtual resource card information exceeds a predetermined time length.

The activation time length is a time length during which the virtual resource card has been set to the activated state. The predetermined time length may be set by a developer of the system or customized by the user. For example, the system developer may set the predetermined time length to 30s or 60s.

Optionally, the virtual resource card information in the security chip may be set to the deactivated state, before the activation time length of the virtual resource card information exceeds the predetermined time length, in one of the following two manners.

In a first possible manner, when receiving the deactivation instruction sent by the MiPay application, the QPAY application sets the virtual resource card information in the activated state in the security chip to the deactivated state. If the QPAY application fails to receive the deactivation instruction from the MiPay application within the predetermined time period, the virtual resource card information in the security chip is set to the deactivated state by the QPAY application.

Generally, the QPAY application fails to receive the deactivation instruction from the MiPay application within the predetermined time period, because the external device has not completed the resource transfer or the MiPay application fails to receive the notification sent by the external device for indicating the completion of resource transfer.

In a second possible manner, it is detected by the QPAY application whether the activation time length of the virtual resource card information reaches a predetermined threshold. If the activation time length reaches the predetermined threshold, the virtual resource card information in the security chip is set by the QPAY application to the deactivated state.

The predetermined threshold is smaller than the predetermined time length. The specific value of the predetermined threshold may be set by the developer of the system or customized by the user. For example, when the predetermined time length is 60s, the predetermined threshold is 58s. As another example, when the predetermined time length is 30s, the predetermined threshold is 29s.

In conclusion, according to the resource transfer method provided by the embodiment of the invention, virtual resource card information stored in the security chip is set by the QPAY application to an activated state, the virtual resource card information in the activated state is read by the NFC controller, the read virtual resource card information is provided to the external device, and then the virtual resource card information in the security chip is set by the QPAY application to a deactivated state. Since the QPAY application sets the virtual resource card information to the deactivated state, the NFC controller has no right to read the virtual resource card information and the virtual resource card information cannot be provided to the external device any more, thereby solving the problem in the related art that a resource account suffers from security risks if an NFC card emulation function of a mobile device is always enabled, and achieving the effect of improving security of the resource account.

In the following are described apparatus embodiments of the invention which can perform the method embodiments of the invention. For details not disclosed in the apparatus embodiments of the invention, reference can be made to the method embodiments of the invention.

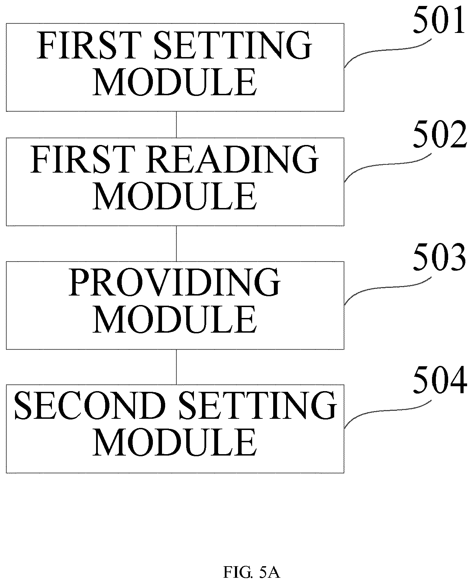

Fig. 5A is a block diagram of a resource transfer apparatus according to an exemplary embodiment. The resource transfer apparatus may be implemented with software, hardware or a combination thereof as the entirety or part of an electronic device. The resource transfer apparatus may comprise a first setting module 501, a first reading module 502, a providing module 503 and a second setting module 504.

The first setting module 501 is configured to set virtual resource card information stored in the security chip to an activated state, the activated state being a state where the virtual resource card information is readable by the NFC controller.

The first reading module 502 is configured to read the virtual resource card information in the activated state by the NFC controller.

The providing module 503 is configured to provide the virtual resource card information read by the first reading module 502 to an external device by the NFC controller, the external device being configured to transfer resources in a first account corresponding to the virtual resource card information to a second account.

The second setting module 504 is configured to set the virtual resource card information in the security chip to a deactivated state, the deactivated state being a state where the virtual resource card information is unreadable by the NFC controller.

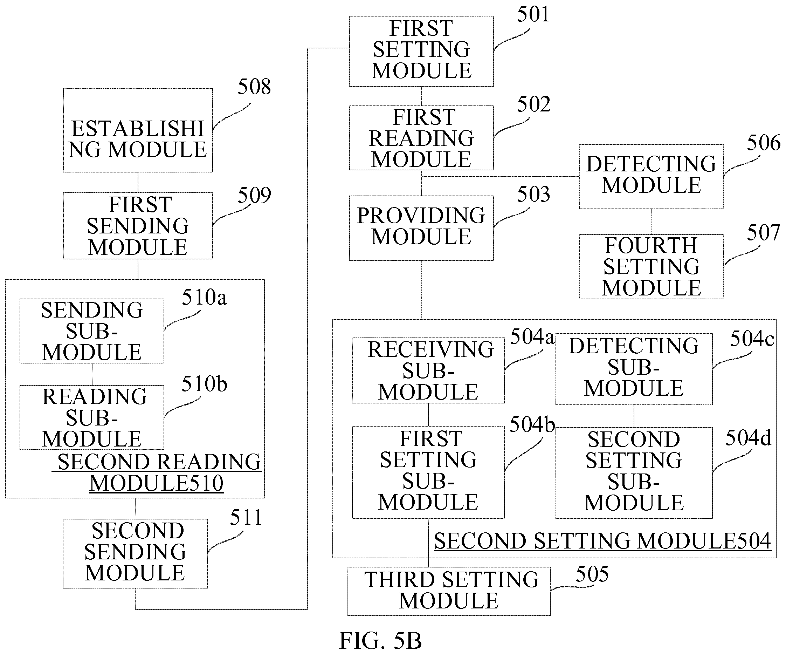

In a possible implementation, as shown in Fig. 5B, a first application for transferring resources and a second application for managing the security chip are run in the electronic device. The second setting module 504 comprises: a receiving sub-module 504a and a first setting sub-module 504b.

The receiving sub-module 504a is configured to receive, by the second application, a deactivation instruction sent by the first application, the deactivation instruction being sent after the first application completes transferring of the resources.

The first setting sub-module 504b is configured to set the virtual resource card information in the security chip to the deactivated state by the second application.

In a possible implementation, Fig. 5B is a block diagram of a resource transfer apparatus according to another exemplary embodiment. As shown in Fig. 5B, a first application for transferring resources and a second application for managing the security chip are run in the electronic device. The second setting module 504 further comprises: a detecting sub-module 504c and a second setting sub-module 504d.

The detecting sub-module 504c is configured to detect, by the second application, whether an activation time length during which the virtual resource card information has been activated reaches a predetermined threshold.

The second setting sub-module 504d is configured to, if the detecting sub-module 504c detects that the activation time length reaches the predetermined threshold, set the virtual resource card information in the security chip to the deactivated state by the second application.

In a possible implementation, as shown in Fig. 5B, the resource transfer apparatus further comprises: a third setting module 505 configured to, if the second application fails to receive a deactivation instruction sent by the first application within a predetermined time period, set the virtual resource card information in the security chip to the deactivated state by the second application.

In a possible implementation, as shown in Fig. 5B, the resource transfer apparatus further comprises: a detecting module 506 and a fourth setting module 507.

The detecting module 506 is configured to, when the second application receives an activation request sent by the first application, acquire, by the second application, identity verification information input by a user and detect whether the identity verification information matches predetermined verification information.

The fourth setting module 507 is configured to, if the detecting module 506 detects that the identity verification information matches the predetermined verification information, set the virtual resource card information stored in the security chip to the activated state.

In a possible implementation, as shown in Fig. 5B, the resource transfer apparatus further comprises: an establishing module 508, a first sending module 509, a second reading module 510 and a second sending module 511.

The establishing module 508 is configured to, when the NFC controller is within a predetermined range of the external device, establish a radio frequency connection between the NFC controller and the external device.

The first sending module 509 is configured to receive, by the NFC controller, a resource transfer request from the external device, and send the resource transfer request to the first application.

The second reading module 510 is configured to read, by the first application, each virtual resource card information stored in the security chip, and display a virtual resource card corresponding to each virtual resource card information.

The second sending module 511 is configured to acquire, by the first application, a virtual resource card selected by a user, and send an activation request to the second application, wherein the activation request triggers the second application to set the virtual resource card information, which is stored in the security chip and corresponds to the virtual resource card selected by the user, to the activated state.

In a possible implementation, as shown in Fig. 5B, the second reading module 510 comprises: a sending sub-module 510a and a reading sub-module 510b.

The sending sub-module 510a is configured to send, by the first application, a virtual resource card information acquisition request to the second application.

The reading sub-module 510b is configured to, after the second application receives the virtual resource card information acquisition request sent by the sending sub-module, read each virtual resource card information stored in the security chip and send the read virtual resource card information to the first application.

In conclusion, according to the resource transfer apparatus provided by the embodiment of the invention, the electronic device reads virtual resource card information in an activated state via the NFC controller by setting the virtual resource card information stored in the security chip to the activated state, provides the read virtual resource card information to an external device by the NFC controller, and then sets the virtual resource card information to a deactivated state. Since the virtual resource card information is set to the deactivated state, the NFC controller has no right to read the virtual resource card information and the virtual resource card information cannot be provided to the external device any more, thereby solving the problem in the related art that a resource account suffers from security risks if an NFC card emulation function of a mobile device is always enabled, and achieving the effect of improving security of the resource account.

An exemplary embodiment of the invention provides a resource transfer apparatus, which can implement the resource transfer method according to the invention. The resource transfer apparatus comprises a processor and a memory storing instructions executable by the processor.

The processor is configured to: set virtual resource card information stored in the security chip to an activated state, the activated state being a state where the virtual resource card information is readable by the NFC controller; read the virtual resource card information in the activated state by the NFC controller; provide the virtual resource card information by the NFC controller to an external device, the external device being configured to transfer resources in a first account corresponding to the virtual resource card information to a second account; and set the virtual resource card information in the security chip to a deactivated state, the deactivated state being a state where the virtual resource card information is unreadable by the NFC controller.

It should be noted that: when resource transfer is performed by the apparatus provided by the above embodiments, the above division into respective functional modules is only given by way of example. In practical application, the above functions may be implemented by different functional modules as required; that is, the internal structure of the mobile terminal may be divided into different functional modules to realize all or part of the above functions.

Regarding the apparatus in the above embodiments, the specific manners for the individual modules to perform operations have been described in detail in the embodiments of the related methods and will not be elaborated herein.

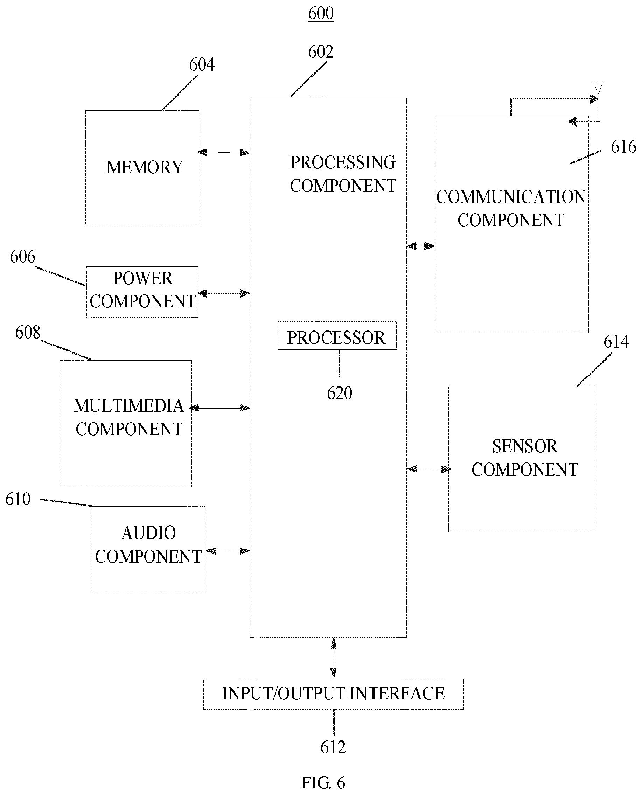

Fig. 6 is a block diagram of a resource transfer apparatus 600 according to an exemplary embodiment. For example, the apparatus 600 may be a mobile phone, a computer, a digital broadcast terminal, a messaging device, a gaming console, a tablet device, a medical device, exercise equipment, a personal digital assistant or the like.

Referring to Fig. 6, the apparatus 600 may comprise one or more of the following components: a processing component 602, a memory 604, a power component 606, a multimedia component 608, an audio component 610, an input/output (I/O) interface 612, a sensor component 614 and a communication component 616.

The processing component 602 typically controls overall operations of the apparatus 600, such as the operations associated with display, telephone calls, data communications, camera operations and recording operations. The processing component 602 may include one or more processors 620 to execute instructions to perform all or some of the steps in the above described methods. Moreover, the processing component 602 may include one or more modules which facilitate the interaction between the processing component 602 and other components. For example, the processing component 602 may comprise a multimedia module to facilitate the interaction between the multimedia component 608 and the processing component 602.

The memory 604 is configured to store various types of data to support the operation of the apparatus 600. Examples of such data comprise instructions for any applications or methods operated on the apparatus 600, contact data, phonebook data, messages, pictures, video, etc. The memory 604 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the apparatus 600. The power component 606 may comprise a power management system, one or more power sources, and any other components associated with the generation, management, and distribution of power in the apparatus 600.

The multimedia component 608 comprises a screen providing an output interface between the apparatus 600 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the apparatus 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone (MIC) configured to receive an external audio signal when the apparatus 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 comprises one or more sensors to provide status assessments of various aspects of the apparatus 600. For instance, the sensor component 614 may detect an open/closed status of the apparatus 600, relative positioning of components, e.g., the display and the keypad, of the apparatus 600, a change in position of the apparatus 600 or a component of the apparatus 600, presence or absence of user's contact with the apparatus 600, an orientation or an acceleration/deceleration of the apparatus 600, and a change in temperature of the apparatus 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor or a temperature sensor.

The communication component 616 is configured to facilitate communication, wired or wirelessly, between the apparatus 600 and other devices. The apparatus 600 can access a wireless network based on a communication standard, such as WiFi, 2G, or 3G, or a combination thereof. In one embodiment, the communication component 616 receives a broadcast signal or broadcast associated information from an external broadcast management system via a broadcast channel. In one embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies. Optionally, the NFC module comprises an NFC controller and an NFC antenna.

In an embodiment, the apparatus 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an embodiment, there is also provided a non-transitory computer-readable storage medium comprising instructions, such as comprised in the memory 604, executable by the processor 620 in the apparatus 600, for performing the above-described methods. For example, the non-transitory computer-readable storage medium may be a ROM, a RAM, a CD-ROM, a magnetic tape, a floppy disc, an optical data storage device or the like.

The non-transitory computer-readable storage medium has stored therein instructions that, when executed by the processor of the apparatus 600, cause the apparatus 600 to perform the steps shown in Figs. 2, 3B, 3E, 3F and 4A.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being defined by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A resource transfer method, which is implemented in an electronic device provided with a Near Field Communication (NFC) controller and a security chip, the method
comprising:
setting (201) virtual resource card information stored in the security chip to an activated state, the activated state being a state where the virtual resource card information is readable by the NFC controller;
reading (202) the virtual resource card information in the activated state by the NFC controller;
providing (203) the virtual resource card information by the NFC controller to an external device, the external device being configured to transfer resources in a first account corresponding to the virtual resource card information to a second account; and
setting (204) the virtual resource card information in the security chip to a deactivated state, the deactivated state being a state where the virtual resource card information is unreadable by the NFC controller.

2. The method of claim 1, wherein
in the electronic device, a first application for transferring resources and a second application for managing the security chip are run, and
setting (204) the virtual resource card information in the security chip to the deactivated state comprises:
receiving, by the second application, a deactivation instruction sent by the first application, the deactivation instruction being sent after the first application completes transferring of the resources; and
setting (307) the virtual resource card information in the security chip to the deactivated state by the second application.

3. The method of claim 1, wherein
in the electronic device, a first application for transferring resources and a second application for managing the security chip are run, and
setting (204) the virtual resource card information in the security chip to the deactivated state comprises:
detecting, by the second application, whether an activation time length during which the virtual resource card information has been activated reaches a predetermined threshold; and
if the activation time length reaches the predetermined threshold, setting (307) the virtual resource card information in the security chip to the deactivated state by the second application.

4. The method of claim 2, further comprising:
if the second application fails to receive a deactivation instruction sent by the first application within a predetermined time period, setting the virtual resource card information in the security chip to the deactivated state by the second application.

5. The method of any of claims 2 to 4, further comprising:
when the second application receives an activation request sent by the first application, acquiring, by the second application, identity verification information input by a user and detecting whether the identity verification information matches predetermined verification information, wherein
if the identity verification information matches the predetermined verification information, the virtual resource card information stored in the security chip is set to the activated state.

6. The method of any of claims 2 to 4, further comprising:
when the NFC controller is within a predetermined range of the external device, establishing (301) a radio frequency connection between the NFC controller and the external device;
receiving (302), by the NFC controller, a resource transfer request from the external device, and sending (302) the resource transfer request to the first application;
reading (303), by the first application, each virtual resource card information stored in the security chip, and displaying (303) a virtual resource card corresponding to each virtual resource card information; and
acquiring (304), by the first application, a virtual resource card selected by a user, and sending (304) an activation request to the second application, wherein the activation request triggers the second application to set the virtual resource card information, which is stored in the security chip and corresponds to the virtual resource card selected by the user, to the activated state.

7. The method of claim 6, wherein reading, by the first application, each virtual resource card information stored in the security chip comprises:
sending (303a), by the first application, a virtual resource card information acquisition request to the second application; and
after the second application receives the virtual resource card information acquisition request, reading (303b) each virtual resource card information stored in the security chip and sending (303b) the read virtual resource card information to the first application.

8. A resource transfer apparatus, which is implemented in an electronic device provided with a Near Field Communication (NFC) controller and a security chip and comprises:
a first setting module (501) configured to set virtual resource card information stored in the security chip to an activated state, the activated state being a state where the virtual resource card information is readable by the NFC controller;
a first reading module (502) configured to read the virtual resource card information in the activated state by the NFC controller;
a providing module (503) configured to provide the virtual resource card information read by the first reading module to an external device by the NFC controller, the external device being configured to transfer resources in a first account corresponding to the virtual resource card information to a second account; and
a second setting module (504) configured to set the virtual resource card information in the security chip to a deactivated state, the deactivated state being a state where the virtual resource card information is unreadable by the NFC controller.

9. The apparatus of claim 8, wherein
in the electronic device, a first application for transferring resources and a second application for managing the security chip are run, and
the second setting module (504) comprises:
a receiving sub-module (504a) configured to receive, by the second application, a deactivation instruction sent by the first application, the deactivation instruction being sent after the first application completes transferring of the resources;
a first setting sub-module (504b) configured to set the virtual resource card information in the security chip to the deactivated state by the second application.

10. The apparatus of claim 8, wherein
in the electronic device, a first application for transferring resources and a second application for managing the security chip are run, and
the second setting module (504) comprises:
a detecting sub-module (504c) configured to detect, by the second application, whether an activation time length during which the virtual resource card information has been activated reaches a predetermined threshold; and
a second setting sub-module (504d) configured to, if the detecting sub-module detects that the activation time length reaches the predetermined threshold, set the virtual resource card information in the security chip to the deactivated state by the second application.

11. The apparatus of claim 9, further comprising:
a third setting module (505) configured to, if the second application fails to receive a deactivation instruction sent by the first application within a predetermined time period, set the virtual resource card information in the security chip to the deactivated state by the second application;
a detecting module (506) configured to, when the second application receives an activation request sent by the first application, acquire, by the second application, identity verification information input by a user and detect whether the identity verification information matches predetermined verification information; and
a fourth setting module (507) configured to, if the detecting module detects that the identity verification information matches the predetermined verification information, set the virtual resource card information stored in the security chip to the activated state.

12. The apparatus of any of claims 9 to 11, further comprising:
an establishing module (508) configured to, when the NFC controller is within a predetermined range of the external device, establish a radio frequency connection between the NFC controller and the external device;
a first sending module (509) configured to receive, by the NFC controller, a resource transfer request from the external device, and send the resource transfer request to the first application;
a second reading module (510) configured to read, by the first application, each virtual resource card information stored in the security chip, and display a virtual resource card corresponding to each virtual resource card information; and
a second sending module (511) configured to acquire, by the first application, a virtual resource card selected by a user, and send an activation request to the second application, wherein the activation request triggers the second application to set the virtual resource card information, which is stored in the security chip and corresponds to the virtual resource card selected by the user, to the activated state.

13. A resource transfer apparatus, which is implemented in an electronic device provided with a Near Field Communication (NFC) controller and a security chip and comprises:
a processor (620), and
a memory (604) storing instructions executable by the processor (620),
wherein the processor (620) is configured to perform a resource transfer method according to any of claims 1 to 7.

14. A computer program including instructions for executing the steps of a resource transfer method according to any of claims 1 to 7 when said program is executed by a computer.

15. A recording medium readable by a computer and having recorded thereon a computer program including instructions for executing the steps of a resource transfer method according to any of claims 1 to 7.
